(19) Europäisches Patentamt
European Patent Office
Office européen des brevets

(11) EP 4 704 211 A1

(12) **EUROPEAN PATENT APPLICATION**
published in accordance with Art. 153(4) EPC

(43) Date of publication:
**04.03.2026 Bulletin 2026/10**

(21) Application number: **24796736.7**

(22) Date of filing: **04.04.2024**

(51) International Patent Classification (IPC):
***H01M 10/058*** (2010.01) ***H01M 4/36*** (2006.01)
***H01M 4/131*** (2010.01) ***H01M 4/505*** (2010.01)
***H01M 4/525*** (2010.01) ***H01M 50/209*** (2021.01)

(52) Cooperative Patent Classification (CPC):
Y02E 60/10

(86) International application number:
**PCT/JP2024/013929**

(87) International publication number:
**WO 2024/224978 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 JP 2023073960**

(71) Applicant: **Panasonic Intellectual Property Management Co., Ltd.**
**Kadoma-shi, Osaka 571-0057 (JP)**

(72) Inventors:
- **JITO, Daizo**
  **Kadoma-shi, Osaka 571-0057 (JP)**
- **KAWAKITA, Akihiro**
  **Kadoma-shi, Osaka 571-0057 (JP)**
- **DEGUCHI, Masaki**
  **Kadoma-shi, Osaka 571-0057 (JP)**
- **INOUE, Katsuya**
  **Kadoma-shi, Osaka 571-0057 (JP)**
- **OGASAWARA,Takeshi**
  **Kadoma-shi, Osaka 571-0057 (JP)**

(74) Representative: **Novagraaf International SA**
**Chemin de l'Echo 3**
**1213 Onex, Geneva (CH)**

# (54) NONAQUEOUS ELECTROLYTE SECONDARY BATTERY AND BATTERY PACK

(57) This nonaqueous electrolyte secondary battery comprises: an electrode body having a structure in which a positive electrode and a negative electrode are laminated with a separator interposed therebetween; and an exterior body that accommodates the electrode body. The nonaqueous electrolyte secondary battery is characterized in that: a positive electrode active material is constituted of secondary particles formed by aggregation of primary particles; a sulfonic acid compound represented by formula (I) is present on the surface of the secondary particles; and through pressure applied from the outside of the exterior body in the lamination direction, in which the positive electrode, the negative electrode, and the separator are laminated, a pressure of $8.00 \times 10^{-2}$ MPa or greater is applied to the electrode body. (In the formula, A represents a group 1 element or a group 2 element, R represents a hydrocarbon group, and n represents 1 or 2.)

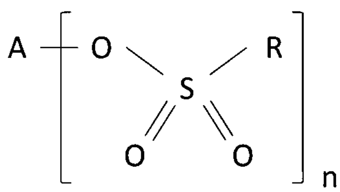

( I )

EP 4 704 211 A1

Figure 1

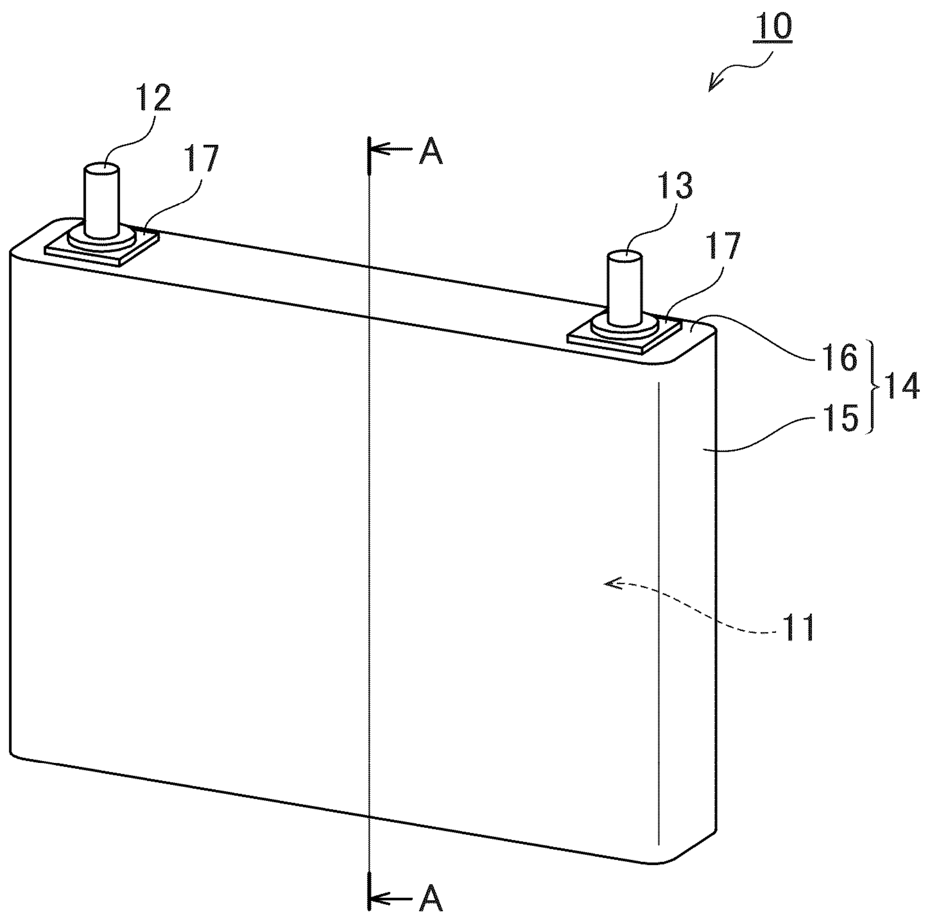

## Description

### TECHNICAL FIELD

The present disclosure relates to a non-aqueous electrolyte secondary battery and a battery pack composed of a plurality of non-aqueous electrolyte secondary batteries connected to each other.

### BACKGROUND ART

In recent years, applications of non-aqueous electrolyte secondary batteries have expanded to power sources for electric vehicles and power storage devices for utilizing renewable natural energy. Since positive electrodes significantly affect battery characteristics, such as battery capacity, output characteristics, and cycle characteristics, many studies have been made on the positive electrode. Patent Literature 1 discloses a non-aqueous electrolyte secondary battery comprising a flat electrode assembly having a structure in which a positive electrode and a negative electrode are stacked via a separator, wherein a lithium-containing transition metal composite oxide having a compound including an element such as Al, Mg, Ti, Zr, or W adhered to the particle surface is used as a positive electrode active material. Patent Literature 1 discloses that a predetermined pressure is applied from the outside to a flat portion of the non-aqueous electrolyte secondary battery, thereby suppressing expansion of the positive electrode active material and improving cycle characteristics of the battery.

### CITATION LIST

### PATENT LITERATURE

PATENT LITERATURE 1: Japanese Patent No. 6509989

### SUMMARY

In a non-aqueous electrolyte secondary battery, it is an important object to achieve both high initial charge-discharge efficiency and excellent cycle characteristics. The conventional techniques including Patent Literature 1 have not sufficiently achieved this object, and there is still much room for improvement.

A non-aqueous electrolyte secondary battery in one aspect of the present disclosure comprises: an electrode assembly having a structure in which a positive electrode and a negative electrode are stacked via a separator; and an outer case that houses the electrode assembly, wherein the positive electrode has a positive electrode core and a positive electrode mixture layer that is formed on a surface of the positive electrode core and that includes a positive electrode active material; the positive electrode active material includes a lithium-containing transition metal composite oxide having a layered structure; the lithium-containing transition metal composite oxide is represented by the general formula $Li_xNi_aCo_bMn_cM_dO_{2-y}$, wherein $0.80 < x < 1.20$, $0.75 < a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles; a sulfonate compound represented by formula (I) is present on surfaces of the secondary particles; and a pressure of greater than or equal to $8.00 \times 10^{-2}$ MPa is applied to the electrode assembly by application of a pressure in a stacking direction of the positive electrode, the negative electrode, and the separator, from outside the outer case,

[Formula 1]

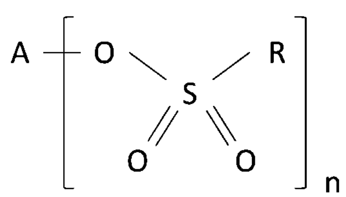

(I)

wherein A represents a group I or group II element, R represents a hydrocarbon group, and n represents 1 or 2.

A battery pack in one aspect of the present disclosure comprises a plurality of the non-aqueous electrolyte secondary batteries described above, wherein the plurality of the non-aqueous electrolyte secondary batteries are arranged in the stacking direction of the positive electrode, the negative electrode, and the separator, and are constrained

to each other in an arrangement direction.

According to the non-aqueous electrolyte secondary battery in one aspect of the present disclosure, the initial charge-discharge efficiency and the cycle characteristics can be improved.

BRIEF DESCRIPTION OF DRAWING

FIG. 1 is a perspective view illustrating the appearance of a non-aqueous electrolyte secondary battery as an example of an embodiment.

FIG. 2 is a sectional view taken along line AA of FIG. 1.

FIG. 3 is a perspective view illustrating a battery pack as an example of an embodiment.

DESCRIPTION OF EMBODIMENTS

In the layered rock-salt structure of the lithium-containing transition metal composite oxide, a layer of a transition metal such as Ni, a Li layer, and an oxygen layer are present, and Li ions present in the Li layer reversibly enter and exit, whereby the charge-discharge reaction of a battery proceeds. Generally, a lithium nickelate-based lithium-containing transition metal composite oxide including Ni as a main component is known as a high-capacity positive electrode active material. From the viewpoint of increasing the capacity of a battery, the content ratio of Ni in the lithium-containing transition metal composite oxide is preferably greater than 75 mol% relative to the total molar amount of metal elements excluding Li.

As a result of investigations by the present inventors, it has been revealed that a non-aqueous electrolyte secondary battery having improved initial charge-discharge efficiency can be realized by allowing the sulfonate compound represented by formula (I) above to be present on the surfaces of the secondary particles of the lithium-containing transition metal composite oxide to be used as the positive electrode active material, probably because the reaction resistance in the positive electrode is reduced by the function of the sulfonate compound, making it possible to increase the charge-discharge depth. However, a new problem of decreased cycle characteristics associated with the increase in charge-discharge depth due to reduced reaction resistance has arisen, presumably because the increase in charge-discharge depth has caused an increase in volume change of the crystal lattice of the positive electrode active material, cracking of the positive electrode active material particles, and side reactions between the positive electrode active material particles and the non-aqueous electrolyte due to cracking.

Accordingly, the present inventors have further conducted studies and found that, in a non-aqueous electrolyte secondary battery comprising an electrode assembly having a structure in which a positive electrode and a negative electrode are stacked via a separator, a non-aqueous electrolyte secondary battery having improved initial charge-discharge efficiency and cycle characteristics while maintaining high capacity can be realized by using a lithium-containing transition metal composite oxide in which a sulfonate compound is adhered to the surfaces of secondary particles as the positive electrode active material and applying a pressure of greater than or equal to $8.00 \times 10^{-2}$ MPa from the outside in the stacking direction of electrode plates, presumably because cracking of positive electrode active material particles due to charge and discharge is suppressed by application of a pressure of greater than or equal to $8.00 \times 10^{-2}$ MPa to the electrode assembly even when a sulfonate compound is present on the surface of the secondary particles.

Hereinafter, one aspect of an embodiment of the non-aqueous electrolyte secondary battery according to the present disclosure will be described in detail with reference to the drawings. Note that the scope of the present disclosure includes a configuration composed of selective combination of constituents of a plurality of embodiments and modified examples described below. Note that the drawings referred for the description of embodiments are schematically illustrated, and the dimension ratios and the like of the components may be different from the actual things. In the present specification, the expression "greater than or equal to xx and less than or equal to yy" refers to a range including the upper limit xx and the lower limit yy.

Hereinafter, a rectangular battery in which an electrode assembly 11 is housed in a rectangular battery case 14 as an outer case will be illustrated as the non-aqueous electrolyte secondary battery, but the outer case of the battery is not limited to a rectangular battery case. The non-aqueous electrolyte secondary battery according to the present disclosure may be, for example, a laminate battery comprising an outer case constituted by a laminated sheet including a metal layer and a resin layer.

FIG. 1 is a perspective view illustrating a non-aqueous electrolyte secondary battery 10 as an example of an embodiment, and FIG. 2 is a sectional view taken along line AA of FIG. 1. As illustrated in FIGS. 1 and 2, the non-aqueous electrolyte secondary battery 10 comprises an electrode assembly 11 and a non-aqueous electrolyte (not shown).

The electrode assembly 11 has an elongated positive electrode 20, an elongated negative electrode 21, and a separator 22 interposed between the positive electrode 20 and the negative electrode 21. The electrode assembly 11 has a wound structure in which the positive electrode 20 and the negative electrode 21 are spirally wound with the separator 22.

Note that the structure of the electrode assembly 11 is not limited to the wound-type, and may be a laminate type in which a plurality of positive electrodes and a plurality of negative electrodes are alternately stacked one by one via separators.

The non-aqueous electrolyte secondary battery 10 comprises a rectangular battery case 14 serving as an outer case that houses the electrode assembly 11 and the non-aqueous electrolyte. The battery case 14 is pressed from the outside at a pressure of greater than or equal to $8.00 \times 10^{-2}$ MPa on both sides thereof in the stacking direction $\alpha$ of the positive electrode 20, the negative electrode 21, and the separator 22 (hereinafter sometimes simply referred to as "stacking direction $\alpha$"). Therefore, the electrode assembly 11 is pressed from both sides in the stacking direction $\alpha$ at a pressure of greater than or equal to $8.00 \times 10^{-2}$ MPa. This suppresses cracking of positive electrode active material particles that constitute the positive electrode 20, as well as side reactions between the positive electrode active material and the non-aqueous electrolyte due to such cracking. As a result, cycle characteristics can be improved even when sulfonate compounds are present on the surfaces of the particles.

In the present embodiment, the non-aqueous electrolyte secondary battery 10 is modularized, whereby the electrode assembly 11 is pressed from both sides in the stacking direction $\alpha$ (see FIG. 3 below). Note that, due to expansion of the electrode assembly 11 due to charge, a stress is generated that tends to push the battery case 14 outward, and a reactive force opposing this stress is also generated.

The battery case 14 is a rectangular metal case composed of a substantially box-shaped case body 15 and a sealing assembly 16 blocking the opening of the case body 15. On the sealing assembly 16, a positive electrode terminal 12 electrically connected to the positive electrode 20 and a negative electrode terminal 13 electrically connected to the negative electrode 21 are provided. The lead portion of the positive electrode is connected to the positive electrode terminal 12 directly or via another conductive member. The lead portion of the negative electrode is connected to the negative electrode terminal 13 directly or via another conductive member. Hereinafter, for convenience of explanation, the direction in which the positive electrode terminal 12 and the negative electrode terminal 13 are arranged is referred to as the "lateral direction" of the battery case 14 or the like, while the direction orthogonal to both the stacking direction $\alpha$ and the lateral direction is referred to as the "vertical direction".

The case body 15 has a flat shape that is longer in the lateral and vertical directions than in the stacking direction $\alpha$. The case body 15 and the sealing assembly 16 are made of a metallic material containing, for example, aluminum as a main component, and an electrode assembly holder may be mounted on the inner surface to ensure insulation. The electrode assembly holder is, for example, a plate molded from a resin such as polypropylene, having a thickness of greater than or equal to 0.05 mm and less than or equal to 0.5 mm. The sealing assembly 16 has a substantially rectangular shape elongated in the lateral direction, and a peripheral portion thereof is welded to the peripheral edge of the opening of the case body 15.

Through-holes (not shown) are each formed on both lateral sides of the sealing assembly 16, and the positive electrode terminal 12 and the negative electrode terminal 13 are inserted into the battery case 14 through these through-holes. The positive electrode terminal 12 and the negative electrode terminal 13 are each fixed to the sealing assembly 16, for example, via insulating members 17 disposed within the through-holes. Note that, in general, the sealing assembly 16 is provided with a gas discharge mechanism (not shown).

FIG. 3 is a perspective view of a battery pack 30 constructed using a plurality of non-aqueous electrolyte secondary batteries 10. As illustrated in FIG. 3, the battery pack 30 comprises a battery group 31 formed by arranging a plurality of non-aqueous electrolyte secondary batteries 10 in the stacking direction $\alpha$, a plurality of spacers 32, and a pair of end plates 33. The spacers 32 are insulating members interposed between adjacent non-aqueous electrolyte secondary batteries 10. The end plates 33 are members that press the battery group 31 from both sides in the stacking direction $\alpha$ with a predetermined force. The pressing pressure applied by the end plates 33 is greater than or equal to $8.00 \times 10^{-2}$ MPa.

The battery pack 30, which is fixed to a pair of the end plates 33 that sandwich the battery group 31 from both sides in the stacking direction $\alpha$ (direction in which the plurality of non-aqueous electrolyte secondary batteries 10 are arranged), comprises bind bars 35 and 36 for binding the individual batteries that form the battery group 31. The bind bars 35 and 36, together with the end plates 33, serve to maintain the bundled state of the batteries and to hold the individual batteries. The bind bar 35 is attached to one lateral side of the battery group 31 along the stacking direction $\alpha$, while the bind bar 36 is attached to the other lateral side of the battery group 31 along the stacking direction $\alpha$.

In the present embodiment, the same non-aqueous electrolyte secondary batteries 10 are disposed in different orientations, and the adjacent batteries are disposed such that the lateral positions of the positive and negative terminals are opposite to each other. In this case, the positive electrode terminals 12 and the negative electrode terminals 13 are alternately arranged along the stacking direction $\alpha$. The battery pack 30 comprises a bus bar 34 electrically connecting the adjacent non-aqueous electrolyte secondary batteries 10. In the example illustrated in FIG. 1, the bus bar 34 connects the individual non-aqueous electrolyte secondary batteries 10 in series, but the connection configuration of the batteries is not limited thereto.

In the battery pack 30, a pair of the end plates 33 are pressed against the battery group 31 by fixing the bind bars 35 and 36 to the end plates 33, thereby binding and pressing the individual non-aqueous electrolyte secondary batteries 10

that form the battery group 31. The end plates 33 are, for example, resin-based plate-like members formed slightly larger than the non-aqueous electrolyte secondary batteries 10. The end plates 33 are each provided, for example, with bolt holes for fastening the bind bars 35 and 36.

Hereinafter, the positive electrode 20, the negative electrode 21, the separator 22, and the non-aqueous electrolyte, all of which constitute the non-aqueous electrolyte secondary battery 10, particularly, the positive electrode active material constituting the positive electrode 20 will be described in detail.

[Positive Electrode]

The positive electrode 20 has a positive electrode core and a positive electrode mixture layer formed on the surface of the positive electrode core. The positive electrode mixture layer is preferably formed on both surfaces of the positive electrode core. As the positive electrode core, a foil of a metal that is stable in the potential range of the positive electrode 20, such as aluminum or an aluminum alloy, and a film with the metal disposed on the surface layer, or the like can be used. The positive electrode mixture layer may include a positive electrode active material, a conductive agent, and a binder. The thickness of the positive electrode mixture layer is greater than or equal to 10 μm and less than or equal to 150 μm, for example, on one side of the positive electrode core. The positive electrode 20 can be produced, for example, by applying a positive electrode slurry including a positive electrode active material, a conductive agent, and a binder on the surface of the positive electrode core, drying the coating, and rolling the dried coating to form the positive electrode mixture layer on both surfaces of the positive electrode core.

Examples of the conductive agent included in the positive electrode mixture layer include carbon materials such as carbon black (CB)including acetylene black (AB) and Ketjenblack, carbon nanotubes (CNTs), and graphene, and graphite. These conductive agents may be used singly or in combination of two or more thereof.

Examples of the binder included in the positive electrode mixture layer include fluorine-based resins such as polytetrafluoroethylene (PTFE) and polyvinylidene fluoride (PVDF), polyacrylonitrile (PAN), polyimide-based resins, acrylic-based resins, and polyolefin-based resins. These binders may be used singly or in combination of two or more thereof.

The positive electrode active material included in the positive electrode mixture layer includes a lithium-containing transition metal composite oxide and a sulfonate compound present on the surface of the lithium-containing transition metal composite oxide. The lithium-containing transition metal composite oxide includes, for example, secondary particles each formed by aggregation of primary particles. As used herein, the surface of the lithium-containing transition metal composite oxide refers to the surface of the secondary particles of the lithium-containing transition metal composite oxide or the interface where the primary particles are in contact with each other. Thus, the sulfonate compound is present on the surfaces of the secondary particles of the lithium-containing transition metal composite oxide or at the interface where the primary particles are in contact with each other.

The particle diameter of the primary particles forming the secondary particles of the lithium-containing transition metal composite oxide is, for example, greater than or equal to 0.02 μm and less than or equal to 2 μm. The particle diameter of the primary particles is measured as the diameter of a circumscribed circle in particle images observed by scanning electron microscopy (SEM). The volume-based median diameter (D50) of the secondary particles of the lithium-containing transition metal composite oxide is, for example, greater than or equal to 2 μm and less than or equal to 30 μm. The D50 means the particle diameter at which the cumulative frequency in the volume-based particle size distribution reaches 50% from the smaller particle side, which is also referred to as the median diameter. The particle size distribution of the secondary particles of the lithium-containing transition metal composite oxide can be measured using a laser diffraction particle size distribution measuring device (e.g., MT3000II, manufactured by MicrotracBEL Corp.), with water used as the dispersion medium.

The lithium-containing transition metal composite oxide has a layered rock-salt structure. Examples of the layered rock-salt structures of the lithium-containing transition metal composite oxide include a layered rock-salt structure belonging to the space group R-3m and a layered rock-salt structure belonging to the space group C2/m. From the viewpoint of high capacity, stability of the crystal structure, and the like, the lithium-containing transition metal composite oxide preferably has a layered rock-salt structure belonging to the space group R-3m. The layered rock-salt structure of the lithium-containing transition metal composite oxide may include a transition metal layer, a Li layer, and an oxygen layer

The lithium-containing transition metal composite oxide is represented by the general formula $Li_xNi_{a-}Co_bMn_cM_dO_{2-y}$, wherein $0.80 < x < 1.20$, $0.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr. The content ratio of elements constituting the lithium-containing transition metal composite oxide can be measured using an inductively coupled plasma atomic emission spectrometer (ICP-AES), an electron probe microanalyzer (EPMA), an energy dispersive X-ray spectrometer (EDX), or the like.

A high-capacity battery can be obtained by adjusting the content ratio of Ni in the lithium-containing transition metal composite oxide to greater than 75 mol% and less than or equal to 95 mol%. The higher the content ratio of Ni, the

higher the capacity of the battery.

The content ratio of Co in the lithium-containing transition metal composite oxide is greater than or equal to 0 mol% and less than or equal to 15 mol%, and Co is an optional component. In other words, the lithium-containing transition metal composite oxide may not contain Co. The lithium-containing transition metal composite oxide may improve the heat resistance of the battery by containing Co.

The content ratio of Mn in the lithium-containing transition metal composite oxide is greater than or equal to 0 mol% and less than or equal to 25 mol%, and Mn is an optional component. In other words, the lithium-containing transition metal composite oxide may not contain Mn. The lithium-containing transition metal composite oxide may stabilize the crystal structure by containing Mn.

The content ratio of M (where M represents at least one element selected from the group consisting of W, Mg, Mo, Nb, Ti, Si, Al and Zr) in the lithium-containing transition metal composite oxide is greater than or equal to 0 mol% and less than or equal to 10 mol%, and M is an optional component. In other words, the lithium-containing transition metal composite oxide may be free of M.

A sulfonate compound represented by formula (I) is present on the surfaces of the secondary particles of the lithium-containing transition metal composite oxide:

[Formula 2]

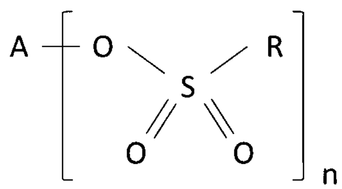

(I)

wherein A represents a group I or group II element, R represents a hydrocarbon group, and n represents 1 or 2. A preferably represents a group I element. Especially, A is more preferably Li or Na, and is particularly preferably Li.

The sulfonate compound may be present in a dotted distribution so as to cover at least a part of the surfaces of the secondary particles of the lithium-containing transition metal composite oxide or may be present so as to cover the entire surface of the secondary particles. The sulfonate compound may be present on the surfaces of the primary particles of the lithium-containing transition metal composite oxide.

In formula (I), R preferably represents an alkyl group. The number of carbon atoms in the alkyl group is preferably less than or equal to 5, and more preferably less than or equal to 3. From the viewpoint of reducing the reaction resistance and the like, a preferred example of R is an alkyl group having less than or equal to 3 carbon atoms, and especially, R preferably represents a methyl group. Note that a part of carbon-bonded hydrogens in R may be substituted with fluorine. In addition, n in formula (I) is preferably 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Especially, at least one selected from the group consisting of lithium methanesulfonate, lithium ethanesulfonate, and sodium methanesulfonate is preferable, and lithium methanesulfonate is particularly preferable.

The sulfonate compound reduces the reaction resistance in the positive electrode 20. With the reduced resistance, the charge-discharge depth can be increased, and the initial charge-discharge efficiency can be improved. Although the sulfonate compound exerts the effect even in an extremely small amount, the amount of sulfonate compound present on the surfaces of the secondary particles of the lithium-containing transition metal composite oxide is preferably greater than or equal to 0.1 mass% and more preferably greater than or equal to 0.3 mass% relative to the mass of the lithium-containing transition metal composite oxide. In addition, the amount of the sulfonate compound present on the surfaces of the secondary particles of the lithium-containing transition metal composite oxide is preferably less than or equal to 1.0 mass% and more preferably less than or equal to 0.8 mass% relative to the mass of the lithium-containing transition metal composite oxide from the viewpoint of cycle characteristics. Thus, the amount of the sulfonate compound is preferably greater than or equal to 0.1 mass% and less than or equal to 1.0 mass%, and more preferably greater than or equal to 0.3 mass% and less than or equal to 0.8 mass% relative to the mass of the lithium-containing transition metal composite oxide.

The presence of the sulfonate compound on the surfaces of the secondary particles of the lithium-containing transition metal composite oxide can be confirmed by Fourier transform infrared spectroscopy (FT-IR). In an infrared absorption spectrum obtained by FT-IR, the positive electrode active material including lithium methanesulfonate, for example, have absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are peaks caused by SO stretching vibration derived from lithium methanesulfonate. The peak near

785 $cm^{-1}$ is an peak caused by CS stretching vibration derived from lithium methanesulfonate. Note that the presence of a positive electrode active material including a sulfonate compound other than lithium methanesulfonate can be confirmed from the absorption peak derived from the sulfonate compound in the infrared absorption spectrum.

The presence of the sulfonate compound can also be confirmed by X-ray photoelectron spectroscopy (XPS). In the spectrum obtained by XPS, the positive electrode active material including lithium methanesulfonate exhibits a peak with a binding energy in the vicinity of 165 eV to 170 eV and an intensity (c/s) of 200 to 1000. Note that the presence of the sulfonate compound on the surfaces of the secondary particles of the lithium-containing transition metal composite oxide can be confirmed by ICP, atomic absorption spectroscopy, synchrotron XRD measurement, time-of-flight secondary ion mass spectrometry (TOF-SIMS), or the like.

A surface modification layer containing at least one element of the group consisting of Ca and Sr (hereinafter referred to as "M1") may be present on the surfaces of the primary particles of the lithium-containing transition metal composite oxide. This effectively suppresses erosion and degradation of the lithium-containing transition metal composite oxide caused by side reactions with the non-aqueous electrolyte, thereby improving the charge-discharge cycle characteristics of the non-aqueous electrolyte secondary battery 10. As used herein, the surfaces of the primary particles include the surfaces of the secondary particles and specifically refer to both surfaces of the secondary particles and the interfaces between the primary particles. The surface modification layer may be present in a dotted distribution so as to cover at least a part of the surfaces of the primary particles or to cover the entire surface of the primary particles.

The total amount of M1 contained in the surface modification layer is preferably less than or equal to 1 mol%, and more preferably less than or equal to 0.5 mol%, relative to the total molar amount of metal elements excluding Li in the lithium-containing transition metal composite oxide. The lower limit of the total amount of M1 is, for example, 0.01 mol%.

In addition to M1, the surface modification layer may contain at least one element (hereinafter referred to as "M2") selected from the group consisting of W, Mo, Ti, Si, Nb, and Zr. In this case, erosion and degradation of the lithium-containing transition metal composite oxide due to side reactions with the non-aqueous electrolyte are more effectively suppressed. The total amount of M2 contained in the surface modification layer is less than or equal to 2 mol%, more preferably less than or equal to 1 mol%, and still more preferably 0.5 mol%, relative to the total molar amount of metal elements excluding Li in the lithium-containing transition metal composite oxide. The lower limit of the total amount of M2 is, for example, 0.01 mol%.

The presence of a surface modification layer on the surfaces of primary particles of the lithium-containing transition metal composite oxide, the presence of M1 contained in the surface modification layer, and the presence of M2 contained in the surface modification layer can be confirmed by measuring a cross-section of secondary particles of the lithium-containing transition metal composite oxide using transmission electron microscopy-energy dispersive X-ray spectroscopy (TEM-EDX). Furthermore, the total amount of M1 and the total amount of M2 can each be measured, for example, by inductively coupled plasma (ICP) emission spectroscopic analysis.

On the surfaces of the primary particles of the lithium-containing transition metal composite oxide, a compound containing M1 (hereinafter referred to as "M1 compound") and a compound containing M2 (hereinafter referred to as "M2 compound") may each be adhered. Examples of the M1 compound include oxides, hydroxides, and carbonates containing M1. Examples of the M2 compound include oxides, hydroxides, carbonates, and sulfates containing M2.

On the surfaces of the primary particles of the lithium-containing transition metal composite oxide, a compound represented by the general formula $Ml_{a}M2_{\beta}O_{\gamma}$, wherein $1 \leq \alpha \leq 2$, $1 \leq \beta \leq 5$, $4 \leq \gamma \leq 9$, M1 is at least one element selected from the group consisting of Ca and Sr, and M2 is at least one element selected from the group consisting of W, Mo, Ti, Si, Nb, and Zr, may be adhered (hereinafter referred to as "$M1_{\alpha}M2_{\beta}O_{\gamma}$ compound"). Note that the M1 compound, the M2 compound, and the $M1_{\alpha}M2_{\beta}O_{\gamma}$ compound may coexist on the surfaces of the primary particles of the lithium-containing transition metal composite oxide.

The presence of the $M1_{\alpha}M2_{\beta}O_{\gamma}$ compound can be confirmed by synchrotron X-ray diffraction measurement. The $M1_{\alpha}M2_{\beta}O_{\gamma}$ compound may be scattered, for example, on the surfaces of the primary and secondary particles of the lithium-containing transition metal composite oxide, or may be present in a layered form so as to broadly cover the surfaces of the primary and secondary particles. That is, the $M1_{\alpha}M2_{\beta}O_{\gamma}$ compound is widely present on the surfaces of the primary particles, both within and on the surfaces of the secondary particles. The secondary particles of the lithium-containing transition metal composite oxide are formed, for example, by aggregation of greater than or equal to 5 primary particles, and the surface area of the primary particles is greater on the inside of the secondary particles than on the surface thereof. The $M1_{\alpha}M2_{\beta}O_{\gamma}$ compound is included, for example, in greater amounts inside the secondary particles than on the surface.

Specific examples of the $M1_{\alpha}M2_{\beta}O_{\gamma}$ compound include $CaWO_4$, $CaMoO_3$, $CaMoO_4$, $CaTiO_3$, $Ca_2TiO_4$, $CaSiO_3$, $Ca_2SiO_4$, $CaNbO_3$, $CaNb_2O_6$, $CaZrO_3$, $CaZr_4O_9$, $SrWO_4$, $SrMoO_3$, $SrMoO_4$, $SrTiO_3$, $Sr_2TiO_4$, $SrSiO_3$, $Sr_2SiO_4$, $SrNbO_3$, $SrNb_2O_6$, $SrZrO_3$, and $SrZr_4O_9$.

A non-metal compound may be present on the surfaces of the primary particles of the lithium-containing transition metal composite oxide. The non-metal compound includes, for example, one or more non-metal elements selected from the group consisting of P and B. Examples of the compound containing P include $Li_{3-x}H_xPO_4$ ($0 \leq x \leq 3$). Examples of the compound containing B include $H_3BO_3$, $Li_3BO_3$, and $Li_2B_4O_7$.

The positive electrode mixture layer may include, in addition to the positive electrode active material of the present embodiment, other positive electrode active materials. Examples of such other positive electrode active materials include lithium-containing transition metal composite oxides having a Ni content of greater than or equal to 0 mol% and less than or equal to 75 mol%.

The positive electrode active material as an example of an embodiment can be produced by the method described below. Note that the production method described herein is merely an example, and the production method of the positive electrode active material is not limited to this method.

The production process of the positive electrode active material includes a synthesis step of mixing a metal oxide with a Li compound or the like to obtain a mixture and firing the mixture to obtain a lithium-containing transition metal composite oxide, a washing step of washing the fired product with water and dehydrating the washed product to obtain a cake-like composition, a drying step of drying the cake-like composition to obtain a powder-like composition, and an addition step of adding at least one of a sulfonate compound and a sulfonic acid solution to the cake-like composition or the powder-like composition.

In the synthesis step, for example, a metal oxide containing greater than 75 mol% and less than or equal to 95 mol% of Ni, greater than or equal to 0 mol% and less than or equal to 15 mol% of Co, greater than or equal to 0 mol% and less than or equal to 25 mol% of Mn, and greater than or equal to 0 mol% and less than or equal to 10 mol% of M (where M represents at least one element selected from W, Mg, Mo, Nb, Ti, Si, Al, and Zr) and a Li compound are mixed to obtain a mixture.

The metal oxide can be obtained, for example, by adding an alkaline solution such as sodium hydroxide dropwise while stirring a solution of a metal salt including Ni and an arbitrary metal element (Co, Mn, M etc.), adjusting the pH to the alkaline side (e.g., greater than or equal to 8.5 and less than or equal to 12.5), thereby precipitating (coprecipitating) a composite hydroxide including Ni and an arbitrary metal element, and heat-treating the composite hydroxide. The heat treatment temperature is not particularly limited, but is in the range of, for example, greater than or equal to 250°C and less than or equal to 600°C.

Examples of the Li compounds include $Li_2O_3$, LiOH, $Li_2O_2$, $Li_2O$, $LiNO_3$, $LiNO_2$, $Li_2SO_4$, $LiOH \cdot H_2O$, LiH, and LiF. The mixing ratio of the metal oxide and the Li compound is preferably such that the molar ratio between the total amount of metal elements in the metal oxide and Li is in the range of greater than or equal to 1:0.80 and less than or equal to 1:1.20, and more preferably greater than or equal to 1:1.00 and less than or equal to 1:1.10, from the viewpoint of facilitating the adjustment of the parameters to the defined ranges.

Next, the synthesis step includes a firing step of firing the obtained mixture. The firing step is, for example, a multi-stage firing step including at least a first firing step of firing the mixture at greater than or equal to 300°C and less than or equal to 680°C in an oxygen stream and a second firing step of firing a fired product obtained in the first firing step at a temperature exceeding 680°C in an oxygen stream. In the first firing step, the temperature is increased to a first set temperature of less than or equal to 680°C at a first temperature rising rate of greater than or equal to 0.2°C/min and less than or equal to 4.5°C/min. In the second firing step, the temperature is increased to a second set temperature of less than or equal to 900°C at a temperature rising rate of greater than or equal to 0.5°C/min and less than or equal to 3.5°C/min. Note that a plurality of first and second temperature rising rates may be set for each temperature region as long as the first and second temperature rising rates are within the above-defined ranges.

The holding time of the first set temperature in the first firing step is preferably less than or equal to 5 hours, and more preferably less than or equal to 3 hours. The holding time of the first set temperature refers to the duration during which the first set temperature is maintained after reaching the first set temperature, and the holding time may be zero. The holding time of the second set temperature in the second firing step is preferably greater than or equal to 1 hour and less than or equal to 10 hours, and more preferably greater than or equal to 1 hour and less than or equal to 5 hours. The holding time of the second set temperature refers to the duration during which the second set temperature is maintained after reaching the second set temperature. The firing of the mixture is performed, for example, in an oxygen stream with an oxygen concentration of greater than or equal to 60%, and the flow rate of the oxygen stream is greater than or equal to 0.2 mL/min and less than or equal to 4 mL/min per 10 $cm^3$ of the firing furnace and greater than or equal to 0.3 L/min per 1 kg of the mixture.

In the washing step, the lithium-containing transition metal composite oxide obtained in the synthesis step was washed with water and dehydrated to obtain a cake-like composition. The washing with water and the dehydration can be performed by known methods and conditions. The washing with water and the dehydration may be performed within a range in which lithium is not eluted from the lithium-containing transition metal composite oxide and battery characteristics are not deteriorated.

In the drying step, the cake-like composition obtained in the washing step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours.

In the addition step, at least one of a sulfonate compound and a sulfonic acid solution is added to the cake-like

composition obtained in the washing step or the powder-like composition obtained in the drying step. Accordingly, the sulfonate compound can be adhered to the surface of the lithium-containing transition metal composite oxide. At least one of a sulfonate compound and a sulfonic acid solution is preferably added to the cake-like composition. The sulfonate compound added may be in the form of powder or solution. The sulfonic acid solution is, for example, a methanesulfonic acid solution obtained by dissolving methanesulfonic acid in water. The Li compound remains in the cake-like composition, and the remaining Li compound is dissolved in water contained in the cake-like composition, whereby the sulfonate compound including Li is formed even when the sulfonic acid solution is added. From the viewpoint of enhancing the effects of the present disclosure, a lithium compound or a lithium compound solution may be added to the cake-like composition or powder-like composition together with the sulfonic acid solution. Alternatively, a mixed solution prepared in advance by mixing the sulfonic acid solution with the lithium compound or lithium compound solution may be added to the cake-like composition or powder-like composition. The lithium compound may be, for example, LiOH, and the lithium compound solution may be, for example, an LiOH solution obtained by dissolving LiOH in water. The amounts of the lithium compound and the sulfonic acid solution added to the cake-like composition preferably satisfy the relation $0 \leq$ Li compound/sulfonic acid $\leq 1.3$ in terms of molar ratio. The amount of the sulfonate compound or sulfonic acid added is preferably greater than or equal to 0.1 mass% and less than or equal to 1 mass%, and more preferably greater than or equal to 0.3 mass% and less than or equal to 0.8 mass% relative to the mass of the lithium-containing transition metal composite oxide. The concentrations of the sulfonic acid solution and the sulfonate compound solution are each, for example, greater than or equal to 0.5 mass% and less than or equal to 40 mass%. Note that the addition step may be performed during or after the washing step, or during or after the drying step, and the timing of implementation may be appropriately changed.

A metal compound including one or more metal elements selected from the group consisting of Sr, Ca, W, Mo, Ti, Si, Nb, and Zr may be adhered to the surface of the lithium-containing transition metal composite oxide by adding raw materials of the metal compound and the non-metal compound at any stage selected from during or after the synthesis step, during or after the washing step, during or after the drying step, or during the addition step. Examples of Sr raw materials include $Sr(OH)_2$, $Sr(OH)_2 \cdot 8H_2O$, SrO, $SrCO_3$, $SrSO_4$, $Sr(NO_3)_2$, $SrCl_2$, and $SrAlO_4$. Examples of Ca raw materials include $Ca(OH)_2$, CaO, $CaCO_3$, $CaSO_4$, $Ca(NO_3)_2$, $CaCl_2$, and $CaAlO_4$. Examples of W raw materials include tungsten oxide ($WO_3$) and lithium tungstate ($Li_2WO_4$, $Li_4WO_5$, or $Li_6W_2O_9$). Examples of Mo raw materials include $MoO_3$ and $Li_2MoO_4$. Examples of Ti raw materials include $TiO_2$ and $Ti(OH)_4$. Examples of Si raw materials include $SiO_2$ and SiO. Examples of Nb raw materials include $Nb_2O_5$ and $Nb_2O_5 \cdot nH_2O$. Examples of Zr raw materials include $Zr(OH)_4$, $ZrO_2$, $Zr(CO_3)_2$, and $Zr(SO_4)_2 \cdot 4H_2O$. These raw materials may be used after the moisture content including hydrates, the particle diameter, and the like are appropriately adjusted by pulverization, drying, or the like.

[Negative Electrode]

The negative electrode 21 has, for example, a negative electrode core and a negative electrode mixture layer formed on the surface of the negative electrode core. The negative electrode mixture layer is preferably formed on both surfaces of the negative electrode core. As the negative electrode core, a metal foil that is stable in the potential range of the negative electrode 21, such as copper or a copper alloy, or a film with the metal disposed on a surface layer may be used. The negative electrode mixture layer may include a negative electrode active material and a binder. The thickness of the negative electrode mixture layer is, for example, greater than or equal to 10 μm and less than or equal to 150 μm on one side of the negative electrode core. The negative electrode 21 can be produced, for example, by applying a negative electrode slurry including a negative electrode active material and a binder on the surface of the negative electrode core, drying the coating, and rolling the dried coating to form the negative electrode mixture layer on both surfaces of the negative electrode core.

As the negative electrode active material included in the negative electrode mixture layer, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by $SiO_x$ ($0.5 \leq x \leq 1.6$) or Si-containing compounds in which fine Si particles are dispersed in a lithium silicate phase represented by $Li_{2y}SiO_{(2+y)}$ ($0 < y < 2$), may be used in combination with graphite.

Examples of the binder included in the negative electrode mixture layer include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

[Separator]

As the separator 22, for example, a porous sheet having ion permeability and insulation properties may be used. Specific examples of the porous sheet include microporous films, woven fabrics, and nonwoven fabrics. Suitable materials for the separator include polyolefins such as polyethylene and polypropylene, and cellulose. The separator 22 may have a single-layer structure or a multilayer structure. Further, a highly heat-resistant resin layer such as an aramid resin layer, or a filler layer including an inorganic compound filler may be provided on the surface of the separator 22.

[Non-Aqueous Electrolyte]

The non-aqueous electrolyte has ion conductivity (for example, lithium ion conductivity). The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain halogen-substituted products in which at least some of the hydrogen atoms in the solvent molecules are replaced with halogen atoms such as fluorine. Examples of the halogen-substituted products include fluorinated cyclic carbonate esters such as fluoroethylene carbonate (FEC), fluorinated linear carbonate esters, and fluorinated linear carboxylic acid esters such as methyl fluoro-propionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as $\gamma$-butyrolactone (GBL) and $\gamma$-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include $LiClO_4$, $LiBF_4$, $LiPF_6$, $LiAlC_4$, $LiSbF_6$, LiSCN, $LiCF_3SO_3$, $LiCF_3CO_2$, $LiAsF_6$, $LiB_{10}Cl_{10}$, lower aliphatic carboxylic acid lithium salts, LiCl, LiBr, LiI, phosphate salts, borate salts, and imide salts. Examples of phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples

of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

## EXAMPLES

Hereinafter, the present disclosure will be described in more detail with reference to Examples and Comparative Examples, but the present disclosure is not limited to Examples below.

### <Example 1>

[Production of Positive Electrode Active Material]

A composite hydroxide represented by $[Ni_{0.90}Co_{0.05}Mn_{0.05}](OH)_2$ obtained by a coprecipitation method was fired at 500°C for 8 hours to obtain a metal oxide including Ni, Co, and Mn. Then, LiOH and the metal oxide were mixed so that the molar ratio of Li to the total amount of Ni, Co, and Mn was 1.03:1 to obtain a mixture. The mixture was heated from room temperature to 650°C at a temperature rising rate of 2.0°C/min and then from 650°C to 780°C at a temperature rising rate of 0.5°C/min under an oxygen stream at an oxygen concentration of 95% (flow rate of 2 mL/min per 10 $cm^2$ and 5 L/min per kg of mixture), followed by holding for 4 hours, to obtain a lithium-containing transition metal composite oxide (synthesis step). Water was added to the lithium-containing transition metal composite oxide so that the slurry concentration was 1500 g/L, and the mixture was stirred for 15 minutes and filtered to obtain a cake-like composition (washing step). Powdered lithium methanesulfonate was added to the cake-like composition (addition step). The amount of lithium methanesulfonate added was 0.1 mass% relative to the total mass of the lithium-containing transition metal composite oxide. After the addition step, a drying step was performed under a vacuum atmosphere at 180°C for 2 hours to obtain a positive electrode active material of Example 1. It was confirmed by Fourier transform infrared spectroscopy (FT-IR) that lithium methanesulfonate was present on the surfaces of the positive electrode active material.

[Production of Positive Electrode]

A positive electrode mixture slurry was prepared by mixing 95 parts by mass of the positive electrode active material, 3 parts by mass of acetylene black (AB), and 2 parts by mass of polyvinylidene fluoride (PVDF), and further adding an appropriate amount of N-methyl-2-pyrrolidone (NMP). Subsequently, the positive electrode mixture slurry was applied to both surfaces of a positive electrode core made of aluminum foil, the coating was dried, then rolled with a rolling roller, and cut into a predetermined electrode size to produce a positive electrode. Note that an exposed portion, in which the surface of the positive electrode core was exposed, was provided in a part of the positive electrode.

[Production of Negative Electrode]

A negative electrode mixture slurry was prepared by mixing 98 parts by mass of artificial graphite, 1 part by mass of sodium carboxymethyl cellulose (CMC-Na), and 1 part by mass of styrene-butadiene rubber (SBR), followed by the addition of an appropriate amount of water. Subsequently, the negative electrode mixture slurry was applied to both surfaces of a negative electrode core made of copper foil, the coating was dried, then rolled with a rolling roller, and cut into a predetermined electrode size to produce a negative electrode. Note that an exposed portion, in which the surface of the negative electrode core was exposed, was provided in a part of the negative electrode.

[Preparation of Non-Aqueous Electrolyte]

Ethylene carbonate (EC), methyl ethyl carbonate (MEC), and dimethyl carbonate (DMC) were mixed at a volume

ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell]

A positive electrode lead was attached to the exposed portion of the positive electrode, a negative electrode lead was attached to the exposed portion of the negative electrode, and the positive electrode and the negative electrode were spirally wound with a polyolefin separator interposed therebetween, followed by press molding in a radial direction to produce a flat wound electrode assembly. This electrode assembly was housed in an outer case composed of an aluminum laminate sheet, the non-aqueous electrolyte was injected therein, and then an opening portion of the outer case was sealed to obtain a test cell.

[Evaluation of Initial Charge-Discharge Efficiency]

The test cell was charged to a cell voltage of 4.3 V at a constant current of 0.2 It under a temperature environment of 25°C and then charged at a constant voltage of 4.3 V until a current value reached 0.01 It. After 1 hour, the test cell was discharged to a cell voltage of 2.5 V at a constant current of 0.2 It. The charge capacity and discharge capacity at that time were measured, and the initial charge-discharge efficiency of the test cell was determined using the following equation. In the test cell of Example 1, the evaluation was performed by pressing the test cell from both sides in the stacking direction $\alpha$ in FIG. 2 from the outside so that a pressure (constituent pressure) of $8.00 \times 10^{-2}$ MPa was applied to the electrode assembly.

$$\text{Initial charge-discharge efficiency} = \text{discharge capacity/charge capacity}$$

[Evaluation of Cycle Characteristics]

The test cell was charged to 4.3 V at a constant current of 0.2 It under a temperature environment of 25°C and then charged to 0.02 It at a constant voltage of 4.3 V. Thereafter, the test cell was discharged to 2.5 V at a constant current of 0.2 It. This charge- discharge operation was defined as one cycle, which was repeated for 100 cycles, and the capacity retention rate was determined using the following equation. In the test cell of Example 1, the evaluation was performed by pressing the test cell from both sides in the stacking direction $\alpha$ in FIG. 2 from the outside so that a constituent pressure of $8.00 \times 10^{-2}$ MPa was applied to the electrode assembly.

Capacity retention rate = (discharge capacity at 100th cycle/discharge capacity at 1st cycle) $\times$ 100

<Example 2>

A test cell was produced and evaluated in the same manner as in Example 1, except that the amount of lithium methanesulfonate added relative to the total mass of the lithium-containing transition metal composite oxide was adjusted to 0.3 mass% in the addition step of producing the positive electrode active material.

<Example 3>

A test cell was produced and evaluated in the same manner as in Example 1, except that the amount of lithium methanesulfonate added relative to the total mass of the lithium-containing transition metal composite oxide was adjusted to 0.5 mass% in the addition step of producing the positive electrode active material.

<Example 4>

A test cell was produced and evaluated in the same manner as in Example 1, except that in the addition step of producing the positive electrode active material, the amount of lithium methanesulfonate added relative to the total mass of the lithium-containing transition metal composite oxide was adjusted to 0.8 mass%.

<Example 5>

A test cell was produced and evaluated in the same manner as in Example 1, except that in the addition step of producing the positive electrode active material, the amount of lithium methanesulfonate added relative to the total mass of

the lithium-containing transition metal composite oxide was adjusted to 1 mass%.

<Example 6>

A test cell was produced and evaluated in the same manner as in Example 1, except that in the addition step of producing the positive electrode active material, the amount of lithium methanesulfonate added relative to the total mass of the lithium-containing transition metal composite oxide was adjusted to 0.5 mass%, the test cell was pressed from both sides in the stacking direction $\alpha$ in FIG. 2 to apply a constituent pressure of $1.30 \times 10^{-1}$ MPa to the electrode assembly, and the evaluation of the initial charge-discharge efficiency and the evaluation of the cycle characteristics were performed.

<Example 7>

A test cell was produced and evaluated in the same manner as in Example 1, except that in the addition step of producing the positive electrode active material, the amount of lithium methanesulfonate added relative to the total mass of the lithium-containing transition metal composite oxide was 0.5 mass%, the test cell was pressed from both sides in the stacking direction $\alpha$ in FIG. 2 to apply a constituent pressure of $5.70 \times 10^{-1}$ MPa to the electrode assembly, and the evaluation of the initial charge-discharge efficiency and the evaluation of the cycle characteristics were performed.

<Example 8>

A test cell was produced and evaluated in the same manner as in Example 1, except that in the addition step of producing the positive electrode active material, the amount of lithium methanesulfonate added relative to the total mass of the lithium-containing transition metal composite oxide was adjusted to 0.5 mass%, the test cell was pressed from both sides in the stacking direction $\alpha$ in FIG. 2 to apply a constituent pressure of 1.30 MPa to the electrode assembly, and the evaluation of the initial charge-discharge efficiency and the evaluation of the cycle characteristics were performed.

<Example 9>

A test cell was produced and evaluated in the same manner as in Example 1, except that in the addition step of producing the positive electrode active material, a lithium methanesulfonate solution obtained by dissolving lithium methanesulfonate in pure water was added instead of powdered lithium methanesulfonate, and the amount of lithium methanesulfonate added relative to the total mass of the lithium-containing transition metal composite oxide was adjusted to 0.5 mass%. Note that the concentration of the lithium methanesulfonate solution added was 10 mass%, and the lithium methanesulfonate solution was added so that the amount of lithium methanesulfonate added would correspond to the above.

<Example 10>

A test cell was produced and evaluated in the same manner as in Example 1, except that in the addition step of producing the positive electrode active material, a methanesulfonic acid solution obtained by dissolving methanesulfonic acid in pure water was added instead of powdered lithium methanesulfonate, and the amount of methanesulfonic acid added relative to the total mass of the lithium-containing transition metal composite oxide was adjusted to 0.5 mass%. Note that the concentration of the methanesulfonic acid solution added was 10 mass%, and the methanesulfonic acid solution was added so that the amount of lithium methanesulfonate would correspond to the above. It was confirmed by Fourier transform infrared spectroscopy (FT-IR) that lithium methanesulfonate was present on the surface of the positive electrode active material.

<Example 11>

A test cell was produced and evaluated in the same manner as in Example 1, except that in the addition step of producing the positive electrode active material, a solution including methanesulfonic acid and LiOH (hereinafter, referred to as a methanesulfonic acid + LiOH solution), in which methanesulfonic acid and LiOH were dissolved in pure water at a molar ratio of 1:0.5, was added instead of powdered lithium methanesulfonate, and the amount of lithium methanesulfonate added relative to the total mass of lithium-containing transition metal composite oxide was adjusted to 0.5 mass%. Note that the concentration of the methanesulfonic acid + LiOH solution added was 10 mass%, and the methanesulfonic acid + LiOH solution was added so that the amount of lithium methanesulfonic added would correspond to the above.

<Example 12>

A test cell was produced and evaluated in the same manner as in Example 1, except that in the addition step of producing the positive electrode active material, a methanesulfonic acid + LiOH solution obtained by methanesulfonic acid and LiOH at a molar ratio of 1:1, was added instead of powdered lithium methanesulfonate, and the amount of lithium methanesulfonate added relative to the total mass of lithium-containing transition metal composite oxide was adjusted to 0.5 mass%. Note that the concentration of the methanesulfonic acid + LiOH solution added was 10 mass%, and the methanesulfonic acid + LiOH solution was added so that the amount of lithium methanesulfonic added would correspond to the above.

<Example 13>

A test cell was produced and evaluated in the same manner as in Example 1, except that in the addition step of producing the positive electrode active material, powdered sodium methanesulfonate was added instead of powdered lithium methanesulfonate, and the amount of sodium methanesulfonate added relative to the total mass of the lithium-containing transition metal composite oxide was adjusted to 0.5 mass%.

<Example 14>

A test cell was produced and evaluated in the same manner as in Example 1, except that in the addition step of producing the positive electrode active material, powdered lithium ethanesulfonate was added instead of powdered lithium methanesulfonate, and the amount of lithium ethanesulfonate added relative to the total mass of the lithium-containing transition metal composite oxide was adjusted to 0.5 mass%.

<Comparative Example 1>

A test cell was produced and evaluated in the same manner as in Example 1, except that in the production of the positive electrode active material, the addition step was omitted, and the evaluation of the initial charge-discharge efficiency and the evaluation of the cycle characteristics were performed without applying a constituent pressure to the test cell.

<Comparative Example 2>

A test cell was produced and evaluated in the same manner as in Example 1, except that the addition step was omitted in the production of the positive electrode active material.

<Comparative Example 3>

A test cell was produced and evaluated in the same manner as in Example 1, except that in the addition step of producing the positive electrode active material, the amount of lithium methanesulfonate added relative to the total mass of the lithium-containing transition metal composite oxide was adjusted to 0.5 mass%, and the evaluation of the initial charge-discharge efficiency and the evaluation of the cycle characteristics were performed without applying a constituent pressure to the test cell.

<Comparative Example 4>

A test cell was produced and evaluated in the same manner as in Example 1, except that in the addition step of producing the positive electrode active material, the amount of lithium methanesulfonate added relative to the total mass of the lithium-containing transition metal composite oxide was adjusted to 0.5 mass%, the test cell was pressed from both sides in the stacking direction $\alpha$ in FIG. 2 to apply a constituent pressure of $4.00 \times 10^{-2}$ MPa to the electrode assembly, and the evaluation of the initial charge-discharge efficiency and the evaluation of the cycle characteristics were performed.

<Comparative Example 5>

A test cell was produced and evaluated in the same manner as in Example 1, except that in the addition step of producing the positive electrode active material, a 10 mass% lithium succinate solution was added instead of powdered lithium methanesulfonate, and the amount of lithium succinate added relative to the total mass of the lithium-containing transition metal composite oxide was adjusted to 0.5 mass%.

<Comparative Example 6>

A test cell was produced and evaluated in the same manner as in Example 1, except that in the addition step of producing the positive electrode active material, a 10 mass% lithium oxalate solution was added instead of powdered lithium methanesulfonate, and the amount of lithium oxalate added relative to the total mass of the lithium-containing transition metal composite oxide was adjusted to 0.5 mass%.

The initial charge-discharge efficiency and capacity retention rate of the test cells in Examples 1 to 14 and Comparative Examples 1 to 6 are shown in Table 1. In addition, Table 1 shows the composition of the lithium-containing transition metal composite oxides, the compounds added, the addition method, the addition amount, and the external constituent pressure. The initial charge-discharge efficiency and capacity retention rate of the test cells in Examples 1 to 14 and Comparative Examples 1 to 6 shown in Table 1 were each expressed relatively, taking the initial charge-discharge efficiency and capacity retention rate of the test cell in Comparative Example 1 as 100. A larger value of the initial charge-discharge efficiency means better initial charge-discharge efficiency, and a larger value of the capacity retention rate means better cycle characteristics.

[Table 1]

| | Lithium-containing transition metal composite oxide | | | External constituent pressure [MPa] | Additive compound | | | Evaluation result | |
|---|---|---|---|---|---|---|---|---|---|
| | Composition [mol%] | | | | Type | Addition method | Addition Amount [mass%] | Initial charge discharge efficiency (relative value) | Capacity retention rate (relative value) |
| | Ni | Co | Mn | | | | | | |
| Example 1 | 90 | 5 | 5 | 0.08 | Li methanesulfonate | Powder addition | 0.1 | 100.7 | 102.6 |
| Example 2 | 90 | 5 | 5 | 0.08 | Li methanesulfonate | Powder addition | 0.3 | 101.0 | 103.3 |
| Example 3 | 90 | 5 | 5 | 0.08 | Li methanesulfonate | Powder addition | 0.5 | 101.6 | 104.5 |
| Example 4 | 90 | 5 | 5 | 0.08 | Li methanesulfonate | Powder addition | 0.8 | 101.1 | 104.2 |
| Example 5 | 90 | 5 | 5 | 0.08 | Li methanesulfonate | Powder addition | 1.0 | 100.9 | 104.0 |
| Example 6 | 90 | 5 | 5 | 0.13 | Li methanesulfonate | Powder addition | 0.5 | 101.6 | 104.4 |
| Example 7 | 90 | 5 | 5 | 0.57 | Li methanesulfonate | Powder addition | 0.5 | 101.5 | 104.3 |
| Example 8 | 90 | 5 | 5 | 1.30 | Li methanesulfonate | Powder addition | 0.5 | 101.5 | 104.2 |
| Example 9 | 90 | 5 | 5 | 0.08 | Li methanesulfonate | Solution addition | 0.5 | 102.0 | 105.2 |
| Example 10 | 90 | 5 | 5 | 0.08 | Methanesulfonic acid | Solution addition | 0.5 | 101.3 | 104.5 |
| Example 11 | 90 | 5 | 5 | 0.08 | Methanesulfonic acid + LiOH (Li/methanesulfonic acid = 0.5 (molar ratio)) | Solution addition | 0.5 | 101.4 | 104.7 |

(continued)

| | Lithium-containing transition metal composite oxide | | | External constituent pressure [MPa] | Additive compound | | | Evaluation result | |
|---|---|---|---|---|---|---|---|---|---|
| | Composition [mol%] | | | | Type | Addition method | Addition Amount [mass%] | Initial charge discharge efficiency (relative value) | Capacity retention rate (relative value) |
| | Ni | Co | Mn | | | | | | |
| Example 12 | 90 | 5 | 5 | 0.08 | Methanesulfonic acid + LiOH (Li/methanesulfonic acid = 1.0 (molar ratio)) | Solution addition | 0.5 | 101.6 | 105.0 |
| Example 13 | 90 | 5 | 5 | 0.08 | Na methanesulfonate | Powder addition | 0.5 | 101.1 | 103.5 |
| Example 14 | 90 | 5 | 5 | 0.08 | Li methanesulfonate | Powder addition | 0.5 | 101.1 | 103.7 |
| Comparative Example 1 | 90 | 5 | 5 | 0 | - | - | - | 100 | 100 |
| Comparative Example 2 | 90 | 5 | 5 | 0.08 | - | - | - | 99.9 | 101.0 |
| Comparative Example 3 | 90 | 5 | 5 | 0 | Li methanesulfonate | Powder addition | 0.5 | 101.5 | 97.0 |
| Comparative Example 4 | 90 | 5 | 5 | 0.04 | Li methanesulfonate | Powder addition | 0.5 | 101.6 | 98.9 |
| Comparative Example 5 | 90 | 5 | 5 | 0.08 | Li succinate | Solution addition | 0.5 | 99.7 | 100.9 |
| Comparative Example 6 | 90 | 5 | 5 | 0.08 | Li oxalate | Solution addition | 0.5 | 99.8 | 100.8 |

As shown in Table 1, the test cells in Examples exhibited improved initail charge-discharge efficiency and capacity retention rate as compared with the test cells in the Comparative Examples. Although a pressure of greater than or equal to $8.00 \times 10^{-2}$ MPa was applied to the electrode assembly, the test cell in Comparative Example 2, in which no sulfonate compound was present on the surfaces of the secondary particles, exhibited a slightly improved capacity retention rate as compared with the test cell in Comparative Example 1, the initial charge-discharge efficiency was not improved.

In addition, the test cells in Comparative Examples 3 and 4, in which the sulfonate compound was present on the surface but the constituent pressure of greater than or equal to $8.00 \times 10^{-2}$ MPa was not applied to the electrode assembly, had a worse capacity retention rate than the test cell in Comparative Example 1, presumably because the presence of the sulfonate compound on the surfaces of the secondary particles increased the volume change of the crystal lattice of the positive electrode active material and caused cracking of the positive electrode active material particles and side reactions between the positive electrode active material particles and the non-aqueous electrolyte due to cracking. On the other hand, when the test cells in Examples were compared with the test cell in Comparative Example 2, the capacity retention rate was also improved in the test cell in Examples in addition to the initial charge-discharge efficiency. That is, the capacity retention rate is also improved by allowing the sulfonate compound to be present on the surfaces of the secondary particles while applying a constituent pressure of greater than or equal to $8.00 \times 10^{-2}$ MPa to the electrode assembly, presumably because, in addition to the fact that the constituent pressure from the outside suppressed cracking of the positive electrode active material particles, coating the surfaces of the positive electrode active material particles with the sulfonate compound suppressed the side reactions between the positive electrode active material particles and the non-aqueous electrolyte. In other words, when the constituent pressure from the outside was less than $8.00 \times 10^{-2}$, the positive electrode active material particles were likely to crack, and thus the effect of coating the surfaces of the positive electrode active

material particles with the sulfonate compound was less likely to be obtained. From these results, it can be concluded that a non-aqueous electrolyte secondary battery with excellent cycle characteristics while improving the initial charge-discharge efficiency is provided by allowing the sulfonate compound to be present on the surfaces of the secondary particles and applying a pressure of greater than or equal to $8.00 \times 10^{-2}$ MPa to the electrode assembly from the outside.

<Example 15>

A test cell was produced and evaluated in the same manner as in Example 1, except that the composition of the composite hydroxide was changed to $[Ni_{0.80}Co_{0.10}Mn_{0.10}](OH_2)$ in the synthesis step of producing the positive electrode active material, and the amount of lithium methanesulfonate added relative to the total mass of the lithium-containing transition metal composite oxide was adjusted to 0.5 mass% in the addition step.

<Example 16>

A test cell was produced and evaluated in the same manner as in Example 1, except that the composition of the composite hydroxide was changed to $[Ni_{0.90}Mn_{0.05}Al_{0.05}](OH_2)$ in the synthesis step of producing the positive electrode active material, and the amount of lithium methanesulfonate added relative to the total mass of the lithium-containing transition metal composite oxide was adjusted to 0.5 mass% in the addition step.

<Example 17>

A test cell was produced and evaluated in the same manner as in Example 1, except that the composition of the composite hydroxide was changed to $[Ni_{0.82}Co_{0.02}Mn_{0.10}Al_{0.06}](OH)_2$ in the synthesis step of producing the positive electrode active material, and the amount of lithium methanesulfonate added relative to the total mass of the lithium-containing transition metal composite oxide was adjusted to 0.5 mass% in the addition step.

<Comparative Example 7>

A test cell was produced and evaluated in the same manner as in Example 1, except that in the synthesis step of producing the positive electrode active material, the composition of the composite hydroxide was changed to $[Ni_{0.80}Co_{0.10}Mn_{0.10}](OH)_2$, and the addition step was omitted.

<Comparative Example 8>

A test cell was produced and evaluated in the same manner as in Example 1, except that in the synthesis step of producing the positive electrode active material, the composition of the composite hydroxide was changed to $[Ni_{0.90}Co_{0.05}Mn_{0.05}](OH)_2$, and the addition step was omitted.

<Comparative Example 9>

A test cell was produced and evaluated in the same manner as in Example 1, except that in the synthesis step of producing the positive electrode active material, the composition of the composite hydroxide was changed to $[Ni_{0.82}Co_{0.02}Mn_{0.10}Al_{0.06}](OH)_2$, and the addition step was omitted.

The initial charge-discharge efficiency and capacity retention rate of the test cells in Examples 15 to 17 and Comparative Examples 7 to 9 are shown separately in Tables 2 to 4. In addition, Tables 2 to 4 show the composition of the lithium-containing transition metal composite oxides, the compound added, the addition method, the addition amount, and the external constituent pressure. The initial charge-discharge efficiency and capacity retention rate of the test cells in Example 15 shown in Table 2 were each expressed relatively, taking the initial charge-discharge efficiency and capacity retention rate of the test cell in Comparative Example 7 as 100. In addition, the initial charge-discharge efficiency and capacity retention rate of the test cells in Example 16 shown in Table 3 were each expressed relatively, taking the initial charge-discharge efficiency and capacity retention rate of the test cell in Comparative Example 8 as 100. Furthermore, the initial charge-discharge efficiency and capacity retention rate of the test cells in Example 17 shown in Table 4 were each expressed relatively, taking the initial charge-discharge efficiency and capacity retention rate of the test cell in Comparative Example 9 as 100. As in Table 1, a larger value of the initial charge-discharge efficiency means better initial charge-discharge efficiency, and a larger value of the capacity retention rate means better cycle characteristics.

[Table 2]

| | Lithium-containing transition metal composite oxide | | | External constituent pressure [MPa] | Additive compound | | | Evaluation result | |
|---|---|---|---|---|---|---|---|---|---|
| | Composition [mol%] | | | | Type | Addition method | Addition Amount [mass%] | Initial charge discharge efficiency (relative value) | Capacity retention rate (relative value) |
| | Ni | Co | Mn | | | | | | |
| Example 15 | 80 | 10 | 10 | 0.08 | Li methanesulfonate | Powder addition | *0.5* | 101.5 | 104.4 |
| Comparative Example 7 | 80 | 10 | 10 | 0.08 | - | - | - | 100 | 100 |

[Table 3]

| | Lithium-containing transition metal composite oxide | | | External constituent pressure [MPa] | Additive compound | | | Evaluation result | |
|---|---|---|---|---|---|---|---|---|---|
| | Composition [mol%] | | | | Type | Addition method | Addition Amount [mass%] | Initial charge discharge efficiency (relative value) | capacity retention rate (relative value) |
| | Ni | Mn | Al | | | | | | |
| Example 16 | 90 | 5 | 5 | 0.08 | Li methanesulfonate | Powder addition | 0.5 | 101.4 | 104.6 |
| Comparative Example 8 | 90 | 5 | 5 | 0.08 | - | - | - | 100 | 100 |

[Table 4]

| | Lithium-containing transition metal composite oxide | | | | External constituent pressure [MPa] | Additive compound | | | Evaluation result | |
|---|---|---|---|---|---|---|---|---|---|---|
| | Composition [mol%] | | | | | Type | Addition method | Addition Amount [mass%] | Initial charge discharge efficiency (relative value) | Capacity retention rate (relative value) |
| | Ni | Co | Mn | Al | | | | | | |
| Example 17 | 82 | 2 | 10 | 6 | 0.08 | Li methanesulfonate | Powder addition | 0.5 | 101.3 | 104.7 |
| Comparative Example 9 | 82 | 2 | 10 | 6 | 0.08 | - | - | - | 100 | 100 |

As shown in Tables 2 to 4, the test cells in Examples exhibited improved initial charge-discharge efficiency and capacity retention rate as compared with the test cells in the Comparative Examples. That is, the effects of the present disclosure were exerted even when the composition of the metal oxide was modified.

<Example 18>

A test cell was produced and evaluated in the same manner as in Example 1, except that the following points were changed in the production of the positive electrode active material.

(1) In the synthesis step, after obtaining a metal oxide having the composition of the composite hydroxide represented by $[Ni_{0.90}Co_{0.05}Mn_{0.05}](OH)_2$, $Ca(OH)_2$ and $WO_3$ were added to the metal oxide so that the molar ratio of Ca to the total amount of Ni, Co, and Mn was 0.25 mol%, and the molar ratio of W was 0.5 mol%. Furthermore, lithium hydroxide monohydrate ($LiOH \cdot H_2O$) was mixed so that the molar ratio of Li to the total amount of Ni, Co, Mn, Ca, and W was 1.03:1 to obtain a mixture.
(2) The amount of lithium methanesulfonate added relative to the total mass of the lithium-containing transition metal composite oxide was adjusted to 0.5 mass% in the addition step.

When the produced positive electrode active material was observed by TEM-EDX on the surfaces of the secondary particles and the interfaces between the primary particles inside the secondary particles, it was confirmed that a surface modification layer containing Ca and W was present. Furthermore, identification of compounds present in the positive electrode active material by synchrotron X-ray diffraction measurement confirmed the presence of $CaWO_4$.

<Comparative Example 10>

A test cell was produced and evaluated in the same manner as in Example 17, except that the addition step was omitted in the production of the positive electrode active material.

The initial charge-discharge efficiency and capacity retention rate of the test cells in Example 18 and Comparative Example 10 are shown in Table 5. In addition, Table 5 shows the composition of the lithium-containing transition metal composite oxides, the compounds added, the addition method, the addition amount, and the external constituent pressure. The initial charge-discharge efficiency and capacity retention rate of the test cells in Example 18 shown in Table 5 were each expressed relatively, taking the initial charge-discharge efficiency and capacity retention rate of the test cell in Comparative Example 10 as 100. As in Table 1, a larger value of the initial charge-discharge efficiency means better initial charge-discharge efficiency, and a larger value of the capacity retention rate means better cycle characteristics.

[Table 5]

| | Lithium-containing transition metal composite oxide | | | Additive element | | External constituent pressure [MPa] | Additive compound | | | Evaluation result | |
|---|---|---|---|---|---|---|---|---|---|---|---|
| | Composition [mol%] | | | Composition [mol%] | | | Addition method | Addition method | Addition Amount [mass%] | Initial charge discharge efficiency (relative value) | capacity retention rate (relative value) |
| | Ni | Co | Mn | Ca | W | | | | | | |
| Example 18 | 90 | 5 | 5 | 0.25 | 0.5 | 0.08 | Li methanesulfonate | Powder addition | 0.5 | 101.6 | 104.3 |
| Comparative Example 10 | 90 | 5 | 5 | 0.25 | 0.5 | 0.08 | - | - | - | 100 | 100 |

As shown in Table 5, the test cell in Example 18 exhibited improved initial charge-discharge efficiency and capacity retention rate as compared with the test cell in Comparative Example 10. That is, the effects of the present disclosure were exerted even when a surface modification layer containing Ca and W was present on the surfaces of the primary particles.

<Comparative Example 11>

A test cell was produced and evaluated in the same manner as in Example 1, except that the positive electrode active material was produced as described below.

A composite hydroxide represented by $[Ni_{0.90}Co_{0.05}Mn_{0.05}](OH)_2$ obtained by a coprecipitation method was fired at 500°C for 8 hours to obtain a metal oxide. Then, LiOH and the metal oxide were mixed so that the molar ratio of Li to the total amount of Ni, Co, and Mn was 1.03:1 to obtain a mixture. The mixture was heated from room temperature to 650°C at a temperature rising rate of 2.0°C/min and then from 650°C to 780°C at a temperature rising rate of 0.5°C/min under an oxygen stream at an oxygen concentration of 95% (flow rate of 2 mL/min per 10 $cm^2$ and 5 L/min per kg of mixture), followed by holding for 4 hours, to obtain a lithium-containing transition metal composite oxide.

Next, 1000 g of the lithium-containing transition metal composite oxide was prepared and added to 3.0 L of pure water, followed by stirring to prepare a suspension. Subsequently, 875 mL of a solution obtained by dissolving 3.15 g of erbium nitrate pentahydrate $[Er(NO_3)_3 \cdot 5H_2O]$ in 200 mL of pure water was added to the suspension. During this process, the pH of the suspension was adjusted to 9.0 by appropriately adding either a 10 mass% aqueous nitric acid solution or a 10 mass% aqueous sodium hydroxide solution.

Next, after completion of the addition of the erbium nitrate pentahydrate solution, suction filtration was carried out, followed by washing with water. The resulting powder was then dried at 120°C to obtain a powder in which erbium hydroxide was adhered as a surface-adhered compound on a part of the surface of the lithium-containing transition metal composite oxide. As a result of measuring the resulting powder with an ICP atomic emission spectrometer, the amount of erbium compound adhered was 0.50 mass% relative to the lithium-containing transition metal composite oxide, in terms of erbium element. Subsequently, the obtained powder was subjected to heat treatment in air at 300°C for 5 hours to produce the positive electrode active material. After the heat treatment, the erbium compound was found to be predominantly erbium oxyhydroxide.

<Comparative Example 12>

A test cell was produced and evaluated in the same manner as in Comparative Example 11, except that in the production of the positive electrode, aluminum hydroxide was used instead of erbium hydroxide as the compound to be adhered, and heat treatment was performed at 400°C. Most of the adhered aluminum hydroxide was changed into an oxide after the heat treatment. As a result of measuring the resulting powder with an ICP atomic emission spectrometer, the amount of aluminum compound adhered was 0.50 mass% relative to the lithium-containing transition metal composite oxide, in terms of aluminum element.

<Comparative Example 13>

A test cell was produced and evaluated in the same manner as in Comparative Example 11, except that in the production of the positive electrode, magnesium hydroxide was used instead of erbium hydroxide as the compound to be adhered, and heat treatment was performed at 400°C. Most of the adhered magnesium hydroxide was changed into an oxide after the heat treatment. As a result of measuring the resulting powder with an ICP atomic emission spectrometer, the amount of magnesium compound adhered was 0.50 mass% relative to the lithium-containing transition metal composite oxide, in terms of magnesium element.

<Comparative Example 14>

A test cell was produced and evaluated in the same manner as in Comparative Example 11, except that in the production of the positive electrode, zirconium hydroxide was used instead of erbium hydroxide as the compound to be adhered, and heat treatment was performed at 400°C. Most of the adhered zirconium hydroxide was changed into an oxide after the heat treatment. As a result of measuring the resulting powder with an ICP atomic emission spectrometer, the amount of zirconium compound adhered was 0.50 mass% relative to the lithium-containing transition metal composite oxide, in terms of zirconium element.

<Comparative Example 15>

A test cell was produced in the same manner as in Example 1, except that tungsten oxide was added instead of lithium methanesulfonate in the addition step of the positive electrode active material. As a result of measuring the resulting powder with an ICP atomic emission spectrometer, the amount of tungsten compound adhered was 0.50 mass% relative to the lithium-containing transition metal composite oxide, in terms of tungsten element.

The initial charge-discharge efficiency and capacity retention rate of the test cells in Example 3 and Comparative Examples 11 to 15 are shown in Table 6. In addition, Table 6 shows the composition of the lithium-containing transition metal composite oxides, the compounds added, the addition method, the addition amount, and the external constituent pressure. The initial charge-discharge efficiency and capacity retention rate of the test cells shown in Table 6 were each expressed relatively, taking the initial charge-discharge efficiency and capacity retention rate of the test cell in Comparative Example 1 as 100. As in Table 1, a larger value of the initial charge-discharge efficiency means better initial charge-discharge efficiency, and a larger value of the capacity retention rate means better cycle characteristics.

[Table 6]

| | Lithium-containing transition metal composite oxide | | | External constituent pressure [MPa] | Surface-adhered compound | | Evaluation result | |
|---|---|---|---|---|---|---|---|---|
| | Composition [mol%] | | | | Type | Addition Amount [mass%]] | Initial charge discharge efficiency (relative value) | Capacity retention rate (relative value) |
| | Ni | Co | Mn | | | | | |
| Example 3 | 90 | 5 | 5 | 0.08 | Li methanesulfonate | 0.5 | 101.6 | 104.5 |
| Comparative Example 11 | 90 | 5 | 5 | 0.08 | Er-containing compound | 0.5 | 100.2 | 101.3 |
| Comparative Example 12 | 90 | 5 | 5 | 0.08 | Al-containing compound | 0.5 | 100.1 | 101.2 |
| Comparative Example 13 | 90 | 5 | 5 | 0.08 | Mg-containing compound | 0.5 | 100.4 | 101.1 |
| Comparative Example 14 | 90 | 5 | 5 | 0.08 | Zr-containing compound | 0.5 | 100.3 | 101.6 |
| Comparative Example 15 | 90 | 5 | 5 | 0.08 | W-containing compound | 0.5 | 100.5 | 101.3 |

As shown in Table 6, the test cell in Example 3 exhibited improved initial charge-discharge efficiency and capacity retention rate as compared with the test cells in Comparative Examples. That is, when the sulfonate compound is present on the surfaces of the secondary particles, the improvement of the initial charge-discharge efficiency and the capacity retention rate is more remarkable than when the Er-containing compound, the Al-containing compound, the Mg-containing compound, the Zr-containing compound, and the W-containing compound are present on the surfaces of the particles.

The present disclosure will be further described with reference to embodiments below.

Constitution 1: A non-aqueous electrolyte secondary battery, comprising: an electrode assembly having a structure in which a positive electrode and a negative electrode are stacked via a separator; and an outer case that houses the electrode assembly, wherein the positive electrode has a positive electrode core and a positive electrode mixture layer that is formed on a surface of the positive electrode core and that includes a positive electrode active material; the positive electrode active material includes a lithium-containing transition metal composite oxide having a layered structure; the lithium-containing transition metal composite oxide is represented by the general formula $Li_xNi_aCo_bMn_cM_dO_{2-y}$, wherein $0.80 < x < 1.20$, $0.75 < a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles; a sulfonate compound represented by formula (I) is present on surfaces of the secondary particles; and a pressure of greater than or equal to $8.00 \times 10^{-2}$ MPa is applied to the electrode assembly by application of a pressure in a stacking direction of the positive electrode, the negative electrode, and the separator, from

outside the outer case,

[Formula 3]

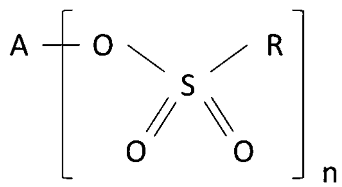

(I)

wherein A represents a group I or group II element, R represents a hydrocarbon group, and n represents 1 or 2.

Constitution 2: The non-aqueous electrolyte secondary battery according to Constitution 1, wherein A represents a group I element.

Constitution 3: The non-aqueous electrolyte secondary battery according to Constitution 1 or 2, wherein A represents Li.

Constitution 4: The non-aqueous electrolyte secondary battery according to any one of Constitutions 1 to 3, wherein R represents an alkyl group.

Constitution 5: The non-aqueous electrolyte secondary battery according to any one of Constitutions 1 to 4, wherein R represents a methyl group.

Constitution 6: The non-aqueous electrolyte secondary battery according to any one of Constitutions 1 to 5, wherein an amount of the sulfonate compound present on a surface of the lithium-containing transition metal composite oxide in the positive electrode active material is greater than or equal to 0.1 mass% and less than or equal to 1 mass% relative to a mass of the lithium-containing transition metal composite oxide.

Constitution 7: The non-aqueous electrolyte secondary battery according to any one of Constitutions 1 to 6, wherein a surface modification layer containing at least one element of the group consisting of Ca and Sr is present on surfaces of the primary particles.

Constitution 8: A battery pack comprising a plurality of the non-aqueous electrolyte secondary batteries according to any one of Constitutions 1 to 7, wherein the plurality of the non-aqueous electrolyte secondary batteries are arranged in the stacking direction of the positive electrode, the negative electrode, and the separator, and are constrained to each other in an arrangement direction.

REFERENCE SIGNS LIST

10 Non-aqueous electrolyte secondary battery, 11 Electrode assembly, 12 Positive electrode terminal, 13 Negative electrode terminal, 14 Battery case (Outer case), 15 Case body, 16 Sealing assembly, 17 Insulating member, 20 Positive electrode, 21 Negative electrode, 22 Separator, 30 Battery pack, 31 Battery group, 32 Spacers, 33 End plate, 34 Bus bar, 35, 36 Bind bar

## Claims

1. A non-aqueous electrolyte secondary battery, comprising:

   an electrode assembly having a structure in which a positive electrode and a negative electrode are stacked via a separator; and
   an outer case that houses the electrode assembly, wherein
   the positive electrode has a positive electrode core and a positive electrode mixture layer that is formed on a surface of the positive electrode core and that includes a positive electrode active material,
   the positive electrode active material includes a lithium-containing transition metal composite oxide having a layered structure,
   the lithium-containing transition metal composite oxide is represented by the general formula $Li_xNi_aCo_bMn_cM_dO_{2-y}$, wherein $0.80 < x < 1.20$, $0.75 < a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles,
   a sulfonate compound represented by formula (I) is present on surfaces of the secondary particles, and
   a pressure of greater than or equal to $8.00 \times 10^{-2}$ MPa is applied to the electrode assembly by application of a

pressure in a stacking direction of the positive electrode, the negative electrode, and the separator, from outside the outer case,

[Formula 1]

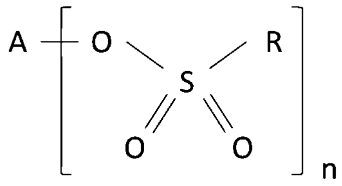

(I)

wherein A represents a group I or group II element, R represents a hydrocarbon group, and n represents 1 or 2.

2. The non-aqueous electrolyte secondary battery according to claim 1, wherein A represents a group I element.

3. The non-aqueous electrolyte secondary battery according to claim 1, wherein A represents Li.

4. The non-aqueous electrolyte secondary battery according to claim 1, wherein R represents an alkyl group.

5. The non-aqueous electrolyte secondary battery according to claim 1, wherein R represents a methyl group.

6. The non-aqueous electrolyte secondary battery according to claim 1, wherein an amount of the sulfonate compound present on a surface of the lithium-containing transition metal composite oxide in the positive electrode active material is greater than or equal to 0.1 mass% and less than or equal to 1 mass% relative to a mass of the lithium-containing transition metal composite oxide.

7. The non-aqueous electrolyte secondary battery according to claim 1, wherein a surface modification layer containing at least one element of the group consisting of Ca and Sr is present on surfaces of the primary particles.

8. A battery pack comprising a plurality of the non-aqueous electrolyte secondary batteries according to any one of claims 1 to 7,
wherein the plurality of the non-aqueous electrolyte secondary batteries are arranged in the stacking direction of the positive electrode, the negative electrode, and the separator, and are constrained to each other in an arrangement direction.

Figure 1

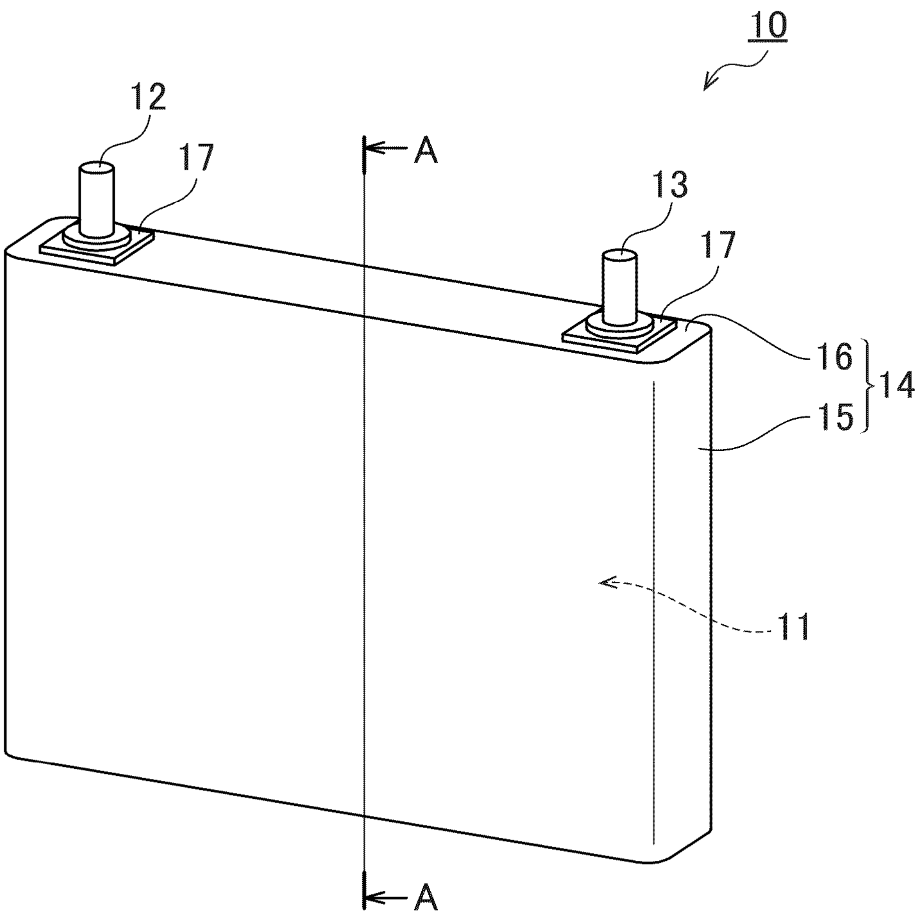

Figure 2

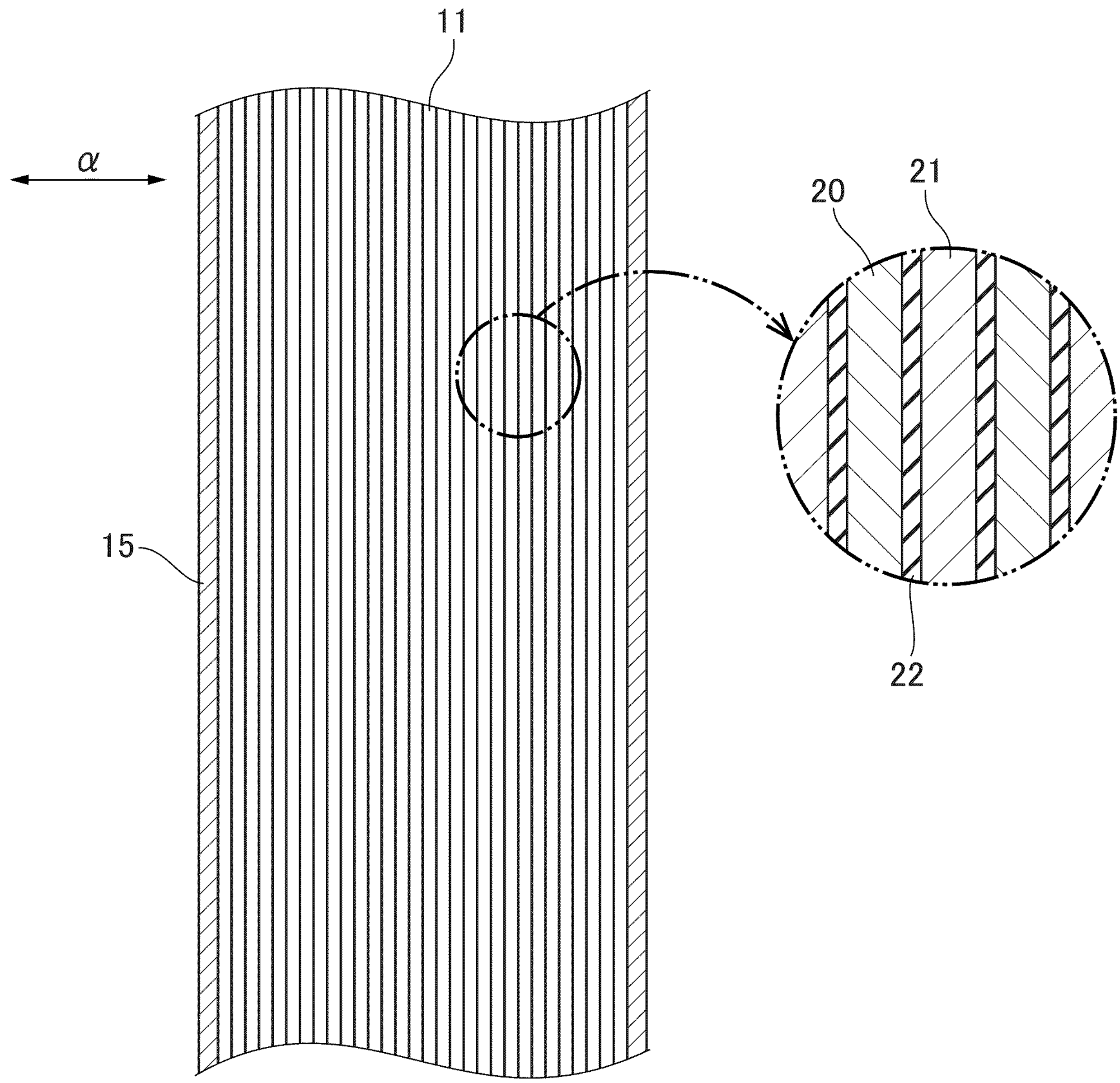

Figure 3

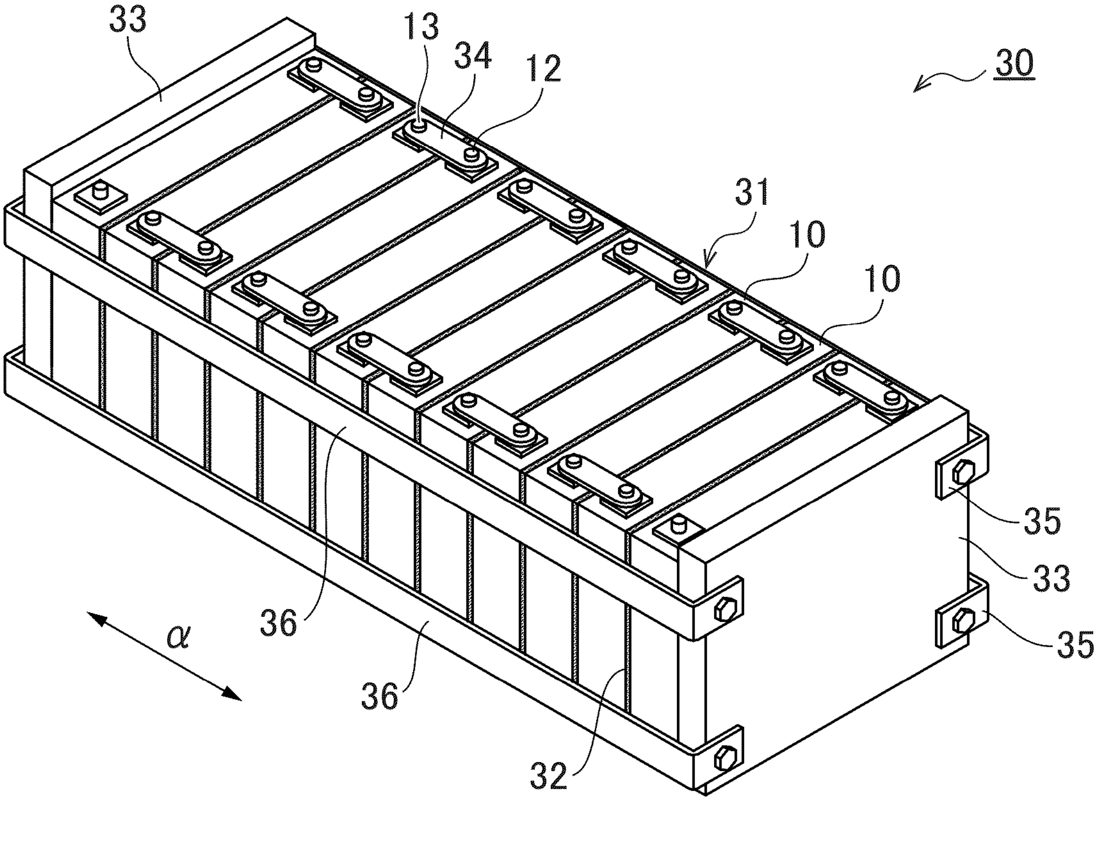

## INTERNATIONAL SEARCH REPORT

International application No. **PCT/JP2024/013929**

### A. CLASSIFICATION OF SUBJECT MATTER

***H01M 10/058***(2010.01)i; ***H01M 4/36***(2006.01)i; ***H01M 4/131***(2010.01)i; ***H01M 4/505***(2010.01)i; ***H01M 4/525***(2010.01)i; ***H01M 50/209***(2021.01)i
FI: H01M10/058; H01M4/525; H01M4/505; H01M4/36 C; H01M4/131; H01M50/209

According to International Patent Classification (IPC) or to both national classification and IPC

### B. FIELDS SEARCHED

Minimum documentation searched (classification system followed by classification symbols)

H01M10/058; H01M4/36; H01M4/131; H01M4/505; H01M4/525; H01M50/209

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/200431 A1 (GS YUASA INTERNATIONAL LTD.) 07 October 2021 (2021-10-07) entire text | 1-8 |
| A | WO 2015/045400 A1 (SANYO ELECTRIC CO., LTD.) 02 April 2015 (2015-04-02) entire text | 1-8 |
| A | WO 2014/119275 A1 (SANYO ELECTRIC CO., LTD.) 07 August 2014 (2014-08-07) entire text | 1-8 |
| A | JP 2019-169286 A (TDK CORPORATION) 03 October 2019 (2019-10-03) entire text | 1-8 |
| A | CN 102610790 A (NINGDE AMPEREX TECHNOLOGY LTD.) 25 July 2012 (2012-07-25) entire text | 1-8 |

☑ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/013929**

**C. DOCUMENTS CONSIDERED TO BE RELEVANT**

| Category* | Citation of document, with indication, where appropriate, of the relevant passages | Relevant to claim No. |
|---|---|---|
| A | CN 112164774 A (HEFEI GUOXUAN HIGH-TECH POWER ENERGY CO., LTD.) 01 January 2021 (2021-01-01)<br>entire text | 1-8 |

**INTERNATIONAL SEARCH REPORT**
**Information on patent family members**

International application No.
**PCT/JP2024/013929**

| Patent document cited in search report | Publication date (day/month/year) | Patent family member(s) | Publication date (day/month/year) |
|---|---|---|---|
| WO 2021/200431 A1 | 07 October 2021 | US 2023/0155180 A1<br>entire text<br>CN 115485877 A | |
| WO 2015/045400 A1 | 02 April 2015 | US 2016/0197350 A1<br>entire text<br>CN 105493334 A | |
| WO 2014/119275 A1 | 07 August 2014 | US 2015/0357635 A1<br>entire text<br>CN 105009350 A | |
| JP 2019-169286 A | 03 October 2019 | (Family: none) | |
| CN 102610790 A | 25 July 2012 | (Family: none) | |
| CN 112164774 A | 01 January 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6509989 B